# EUROPEAN PATENT APPLICATION

(11) **EP 2 876 788 A2**
(43) Date of publication of application: **27.05.2015**
(21) Application number: 14193786.2
(22) Date of filing: 19.11.2014
(51) Int. Cl.: H02K 15/02

(54) **Manufacturing a stator for a rotating electrical machine**

(30) Priority: 20.11.2013 GB 201320484
(71) Applicant: Cummins Generator Technologies Limited, Peterborough PE2 6FZ (GB)
(72) Inventor: Arulsamy Mariajoseph, Dominic, 85053 Ingolstadt (DE); Qu, Nan, 85134 Stammham (DE); Biebighäuser, Andreas, 85049 Ingolstadt (DE)
(74) Representative: Williams, Michael Ian

(57) **Abstract**

A method of manufacturing lamination segments for the stator of an electrical machine is disclosed. The method comprises producing successive segments (24) from a strip of raw material. Techniques are disclosed for using parts of the raw material which would otherwise be scrap. In one embodiment each segment has a recess (32) in its outer edge, and a portion of an adjacent segment is produced from raw material within the recess. This can allow the scrap rate for segmented stator laminations to be optimised.

## Description

The present invention relates to techniques for manufacturing a stator for a rotating electrical machine. In particular, the present invention relates to techniques for optimising the scrap rate for segmented stator laminations.

Rotating electrical machines such as motors and generators generally comprise a stator having a laminated metal core. The laminations are usually punched from a roll of electrical steel, and then stacked together to form the stator core.

Electrical steel is a commercially available product which is generally supplied in rolls of certain widths. For a smaller machine it may be possible to punch a complete stator lamination from a commercially available roll of steel. However, for larger machines it may be desirable to divide each stator lamination into a number of segments. A segmented stator design may facilitate assembly of the machine, for example, by allowing stator windings to be inserted more easily. Furthermore, a segmented design may be necessary where the diameter of the stator exceeds the width of the available electrical steel.

When lamination segments are punched from a roll of electrical steel, a certain amount of the raw material is left behind, and is usually discarded as scrap. However, due to the cost of electrical steel, it would be desirable to reduce the amount of scrap produced when forming the segments.

US 2011/0016701 discloses a technique for reducing scrap material for large stator laminations. Slant cuts are made along a strip of electrical steel to form trapezoids. Two of the trapezoids are joined together to form a hexagon. A lamination is then stamped from the hexagon.

The technique disclosed in US 2011/0016701 requires the strip of electrical steel to have a width which is at least half the diameter of the stator, which may not always be feasible or cost effective. Furthermore, the technique requires an additional manufacturing step, thereby increasing the cost of the manufacturing process.

The present invention relates generally to methods of manufacturing lamination segments for the stator of an electrical machine, the methods comprising producing successive segments from a strip of raw material, wherein a part of the raw material which would otherwise be scrap is used by an adjacent segment.

According to a first aspect of the present invention there is provided a method of manufacturing lamination segments for the stator of an electrical machine, the method comprising producing successive segments from a strip of raw material, wherein a segment has a recess in its outer edge, and a portion of an adjacent segment is produced from raw material within the recess.

The present invention may provide the advantage that, by providing a segment with a recess in its outer edge and producing a portion of an adjacent segment from raw material within the recess, it may be possible for successive segments to be located closer together than would otherwise be the case. This in turn may reduce the amount of raw material which is consumed.

The recess is preferably a part of the outer edge where the radius of the segment is less than that of another part of the outer edge. Thus the recess may be considered conceptually as a part of the outer edge which extends inwards from its notional radius, or as a space next to a part which extends outwards or a space between two parts which extend outwards.

Preferably each segment has an outer edge and an inner edge. The outer edge of one segment may lie alongside the inner edge of the adjacent segment, prior to punching or otherwise removing the segments from the raw material. Thus, at least part of an inner edge of the adjacent segment may lie within the recess.

Preferably at least part of the outer edge of the segment has a shape which substantially corresponds to at least part of the inner edge of the adjacent segment. For example, the recess may have a shape which substantially corresponds to part of the inner edge of the adjacent segment. This can help in nesting successive segments together, thereby allowing the segments to be located closer together and reducing the amount of raw material consumed.

The inner edge and the outer edge of the segment may both be curved such that, when a plurality of segments is placed together, the segments form a substantially annular lamination. Thus the inner edge and/or the outer edge may be a substantially circular arc. The inner edge and the outer edge may have substantially the same centre of curvature, which may correspond to the axis of rotation of the assembled machine. However the radius of curvature of the inner edge is preferably less than that of the outer edge.

In a typical configuration the outer edge of one segment lies alongside the inner edge of the adjacent segment, and the radius of curvature of the inside edge is less than that of the outer edge. Thus the distance between the two segments is typically the smallest at a point corresponding to the circumferentially outermost part of the inner edge. In order to accommodate part of the adjacent segment, the recess may be located in a position on the outer edge which substantially corresponds to a circumferentially outermost part of the inner edge of the adjacent segment.

Since the radius of curvature of the inner edge may be less than that of the outer edge, the inner edge may have a length which is less than that of the outer edge. Thus the inner edge of the adjacent segment may only extend part way along the outer edge. Therefore the recess may be located in a position on the outer edge which is circumferentially inwards from the end of the outer edge.

The recess may be a part of the outer edge which is cut out in a radial direction. The depth of the recess may decrease in a circumferential direction towards the centre of the segment. Since the inner edge of the adjacent segment may have a radius of curvature which is less than that of the outer edge of the segment with the recess, this can help in nesting successive segments as closely together as possible while minimising the amount of raw material which is removed. Preferably the recess has a radius of curvature which is substantially the same as that of the inner edge of the adjacent segment.

Typically a stator for an electrical machine comprises teeth which define stator slots, into which stator windings are inserted. The teeth are usually located on the inside of the stator. Thus each segment may comprise teeth defining stator slots, and at least some of the teeth of the adjacent segment may be at least partially located within the recess. For example, the circumferentially outermost teeth may have their ends located within the recess.

Preferably each segment comprises two recesses in its outer edge, with each recess preferably corresponding to an outermost part of the inner edge of the adjacent segment.

Preferably successive segments have substantially the same size and/or shape. This may facilitate the manufacturing process, by avoiding the need for different types of segment. However, if desired, differently sized and/or shaped segments could be used.

The method may further comprise assembling the segments into a stator core. The stator core may comprise a plurality of laminations, each lamination comprising a plurality of segments.

Preferably some of the laminations are indexed (i.e. rotated) with respect to other laminations. For example, each lamination may be indexed with respect to an adjacent lamination or laminations, or groups of laminations may be indexed with respect to each other. By indexing the laminations, the joints between the segments may be located in different positions in different laminations, which may help to strengthen the stator core. Furthermore, the recesses in the segments may occur in different positions for different laminations. Thus the laminations may be arranged such that at least two laminations have segments with recesses which do not overlap. This may help to reduce any impact on the magnetic properties of the stator core which might be caused by the recesses.

In the assembled machine, locating bars or landing bars may be used in order to locate the laminations and hold them together. The landing bars typically run through successive laminations in an axial direction. Thus each segment may comprise one or more landing bar slots for accommodating a landing bar.

A landing bar slot may be located on the outer edge of the segment. Thus the recess may be a part of the outer edge where the radius of the segment is less than that of a part where a landing slot is located. Thus the recess may have a radius which is less than that of the outermost part of a landing bar slot.

In order to further economise on the use of raw material, a landing bar slot may be located at the extremity of a segment, that is, the circumferentially outermost part of the outer edge. This can allow a larger segment to be produced from the same width of raw material, or alternatively a narrower strip of raw material to be used for the same segment size, than would otherwise be the case. In the assembled stator, the landing bar slot may be formed partially in one segment and partially in an adjacent segment, or it may be formed entirely in one segment. Thus each segment may comprise at least part of a landing part slot at the circumferentially outermost part of its outer edge.

In order to assist in cooling of the machine, it may be desirable for the stator to have cooling fins on its outside surface. In order to achieve this, a segment may comprise at least one cooling fin on its outer edge. Preferably a plurality of cooling fins is provided on each segment.

Prior to removal of the segments from the raw material, the outside edge of one segment may lie alongside the inside edge of the adjacent segment. However, since the outside edge may be longer than the inside edge, there may be a part of the outside edge which lies adjacent to raw material which is not normally used. This part will typically be located circumferentially outwards from the recess.

Preferably at least one cooling fin is located in a position on the outer edge which lies adjacent to raw material which is not normally used. For example, a cooling fin may be located circumferentially outwards from the recess. The height of the cooling fin may be greater than the distance between two adjacent segments in a radial direction. This may allow one or more cooling fins to be produced which have a height suitable for achieving a desired level of cooling, without requiring the segments to be spaced further apart on the strip of raw material.

Since the radius of curvature of the inside edge may be less than that of the outside edge, there may also be a space between the outer edge of one segment and the inner edge of an adjacent segment towards the centre of the segments. This space will typically be located circumferentially inwards from the recess. It may also be possible to use this space for cooling fins. Thus a cooling fin may be located circumferentially inwards from the recess.

In order to reduce or avoid the need to space the segments further apart, a cooling fin which is located circumferentially inwards from the recess may have a height which is less than that of a cooling fin which is located circumferentially outwards of the recess.

A plurality of cooling fins may be provided circumferentially inwards from the recess. In this case, the height of the cooling fins may increase in a circumferential direction towards the centre of the segment. This may allow the height of the fins to be maximised without (substantially) increasing the spacing between the segments.

In order to maximise the height of the cooling fins without requiring the segments to be spaced further apart, it may be possible for a cooling fin to occupy the space between the teeth of an adjacent segment (i.e. the space which is to form a stator slot). Thus at least one fin may extend into a stator slot in an adjacent lamination segment.

The above feature may also be provided independently, and thus according to another aspect of the invention there is provided a method of manufacturing lamination segments for the stator of an electrical machine, the method comprising producing successive segments from a strip of raw material, wherein a segment comprises at least one cooling fin on its outer edge which extends into a stator slot in an adjacent lamination segment.

In some circumstances it may be possible to produce two lines of segments from the same roll of steel. This may be the case, for example, where smaller segments are to be produced, or where a wider roll of steel is available.

In one embodiment of the invention, two lines of segments are produced from the strip of raw material, and part of a segment in one line is located in an area between two adjacent segments of the other line. By locating part of a segment in one line in an area between two segments of the other line, the total amount of raw material which is consumed may be less than would otherwise be the case.

This embodiment may also be provided independently, and thus, according to another aspect of the invention there is provided a method of manufacturing lamination segments for the stator of an electrical machine, the method comprising producing successive segments from a strip of raw material, wherein two lines of segments are produced from the strip of raw material, and part of a segment in one line is located in an area between two adjacent segments of the other line.

Preferably a radial edge of a segment in one line runs substantially parallel to a radial edge of a corresponding segment in the other line.

In order to allow part of a segment in one line to be located in an area between two segments of the other line, the segments in one line may face in the opposite direction to the segments in the other line, that is, the outside edge of a segment in one line may be on the same side as the inside edge of a segment in the other line. Thus the segments in one line may be rotated with respect to the segments in the other line, for example, through an angle of approximately 180° (for example, between 170° and 190°).

Electrical steel is a commercially available product which is typically available in certain standard widths. Furthermore, punching presses are usually designed to operate with raw materials of particular widths. It would therefore be desirable to be able to use the same width of electrical steel for different stators sizes or different segment sizes.

In known techniques for manufacturing lamination segments, the segments lie square on the strip of raw material. Thus one half of each segment is effectively the mirror image of the other half about a line running down the centre of the strip of material (with the possible exception of any landing bar slots which may be provided). As a consequence, a radial line through the centre of the segments will run substantially parallel to the direction of the strip of raw material. However, in an embodiment of the invention, the segments are arranged at an angle to the strip of raw material. This may allow one or more lines of segments to be produced from a strip of raw material which would not otherwise be wide enough. Furthermore, this may allow one raw material width to be used for different sized segments. This may provide the advantage of reducing stock inventory, and allowing more efficient use of punching presses, since a single press may be used for more than one segment size.

This embodiment may also be provided independently, and thus, according to another aspect of the invention, there is provided a method of manufacturing lamination segments for the stator of an electrical machine, the method comprising producing successive segments from a strip of raw material, wherein the segments are arranged at an angle to the strip of raw material.

By arranging the segments at an angle to the strip of raw material, it may be possible to produce segments of a larger size, or segments from a strip of raw material which would not otherwise be wide enough. Furthermore, two or more lines of segments may be produced from a strip of raw material which would not otherwise be wide enough. In addition, a single or a reduced number of raw material widths may be used for a plurality of differently sized segments and/or stators.

The segments may be arranged such that a radial line through the centre of a segment is at an angle to the direction of the strip of raw material.

Where the segments are arranged at an angle to the strip of raw material, the gap between two adjacent segments may be smaller on one side than on the other. Thus each segment may comprise a single recess in its outer edge. The single recess may be located on the side of the segment where the gap between adjacent segments is smaller. Alternatively, each segment may comprise two recesses in its outer edge, and a recess on one side of the segment may be larger than a recess on the other side of the segment. For example, the recess on the side where the gap between adjacent segments is smaller may be larger than the recess on the side where the gap between adjacent segments is larger. This can help to ensure optimum use of raw material while avoiding unnecessary removal of material from any particular segment.

Creating a recess in a segment changes the amount of material in the final stator, and this may have an effect on the magnetic properties of the stator. For example, reducing the amount of magnetic material in the stator may increase the magnetising current required to produce the same magnetic flux. As noted above, any such effect may be reduced by indexing the stator laminations. However, further measures to reduce the effect of a recess in a lamination segment may be desirable.

In accordance with an embodiment of the invention, a segment has a recess in one part of its outer edge, and a protrusion on another part of its outer edge. A protrusion is preferably a part of the outer edge where the radius of the segment is greater than that of another part of the outer edge. For example, a protrusion may be a part of the outer edge where the radius is greater than the notional radius of the segment, and/or greater than the radius at which a landing bar slot is located. Creating a protrusion may help to compensate for any effect on the magnetic properties of the stator caused by the recess, and in particular may provide support for magnetisation by reducing the magnetising current required to produce a particular magnetic flux, in comparison to the case where the protrusion is not provided.

In another embodiment of the invention, the yoke height of a segment is reduced from its notional value. The notional value may be the value which, for a conventional segment, would give the required amount of magnetization in the stator. By reducing the yoke height of the segments, the segments can be located closer together on the strip of raw material, thus reducing the amount of raw material consumed. However, reducing the yoke height of the segments reduces the diameter of the stator, and thus reduces the amount of magnetic material in the stator. In order to compensate for this, one or more protrusions may be provided on the outer edge in order to support magnetization in the stator core.

Thus in this embodiment the yoke height of the segment may be reduced to a value which, absent other measures, would not give sufficient magnetization in the stator core, and to (at least partially) compensate one or more protrusions may be provided on the outer edge of the segment to support magnetisation in the stator core.

In this embodiment, part of the outer edge of the segment which is next to a protrusion, or between two protrusions, may be considered conceptually as a recess. However, in this embodiment, any landing bar slots will generally be located at a reduced radius, in comparison to the case where the yoke height of the segment is not reduced.

In either of the above embodiments, the protrusion may be created from a part of the raw material which would otherwise be scrap. This can allow support for magnetisation to be provided without increasing the amount of raw material consumed.

The above feature may be provided independently. Thus, according to another aspect of the invention, there is provided a method of manufacturing lamination segments for the stator of an electrical machine, the method comprising producing successive segments from a strip of raw material, wherein a segment has a protrusion on part of its outer edge to support magnetisation in the stator, and the protrusion is created from a part of the raw material which would otherwise be scrap.

For example, a protrusion may be provided towards the end of the outer edge, in a location which does not coincide with the teeth of an adjacent segment. Alternatively or in addition, a protrusion may be provided in a location which is circumferentially inwards of an outer tooth of an adjacent segment. In this case, the height of the protrusion may increase in a circumferential direction towards the centre of the segment.

Where the segments are arranged at an angle to the strip of raw material, the gap between two adjacent segments may be larger on one side than on the other. In this case a protrusion may be located on the side of the segment where the gap between adjacent segments is larger. This can allow the protrusion to be created from a part of the raw material which would otherwise be scrap.

Preferably the segments are assembled into a stator core comprising a plurality of laminations, and the laminations are indexed such that a protrusion in one lamination overlaps or coincides (preferably circumferentially) with a recess in another lamination. This may help to reduce any impact on the magnetic properties of the stator caused by the recess.

In any of the above arrangements the segments may be punched or stamped from the strip of raw material, or cut or removed from the raw material in any other way. The outer edge of one segment may lie adjacent to the inner edge of the subsequent segment, or vice versa. The raw material is preferably electrical steel but may be any other suitable material. The method is preferably carried out by a punching press which may be computer controlled, or controlled by a human operator, or a combination of the two.

According to another aspect of the invention there is provided a punching press arranged to carry out the method of any of the preceding claims.

According to another aspect of the invention there is provided a lamination segment produced by any of the methods described above.

According to another aspect of the invention there is provided a lamination segment for the stator of an electrical machine, the segment comprising an recess in its outer edge, the recess being arranged such that, when the segment is formed from a strip of raw material, a portion of an adjacent segment can be formed from raw material within the recess.

Preferably the shape of the recess substantially corresponds to the shape of part of the inner edge of the segment.

According to another aspect of the invention there is provided a lamination segment for the stator of an electrical machine, the segment comprising a protrusion on part of its outer edge to support magnetisation in the stator core, the protrusion being arranged such that, when successive segments are formed from a strip of raw material, the protrusion is formed from a part of the raw material which would otherwise be scrap.

According to another aspect of the invention there is provided a stator core comprising a plurality of segments in any of the forms described above or produced by any of the methods described above.

Features of one aspect of the invention may be applied to any other aspect. Any of the method features may be provided as apparatus features and vice versa.

Preferred embodiments of the invention will now be described, purely by way of example, with reference to the accompanying drawings, in which:
Figure 1 shows an axial cross section through the stator of an electrical machine;
Figure 2 shows a known technique for punching stator segments from a roll of electrical steel;
Figure 3 shows a segment design in accordance with an embodiment of the invention;
Figure 4 shows a more detailed part of a segment;
Figure 5 shows a segment design in another embodiment of the invention;
Figure 6 shows a variant of the embodiment of Figure 5;
Figure 7 shows a segment design in a further embodiment of the invention;
Figure 8 shows a segment design in a further embodiment of the invention;
Figure 9 shows a segment design in another embodiment of the invention;
Figures 10 and 11 show a segment design in another embodiment of the invention;
Figure 12 shows a segment design in another embodiment of the invention;
Figures 13 and 14 show a segment design in another embodiment of the invention;
Figures 15(a) to 15(c) show three different segment designs;
Figure 16 shows how the segments of Figure 15(c) can be produced from a roll of electrical steel; and
Figure 17 shows the profiles of two adjacent lamination segments.

Rotating electrical machines generally comprise a rotor and a stator with an air gap between the two. The rotor is provided with rotor windings or permanent magnets in order to develop a magnetic flux in the air gap. The stator is provided with stator windings which intersect the magnetic flux produced by the rotor. In the case of a generator, when the rotor is rotated by a prime mover, the rotating magnetic field produces a voltage in the stator windings. In the case of a motor, an electrical current is supplied to the stator windings and the thus generated magnetic field causes the rotor to rotate.

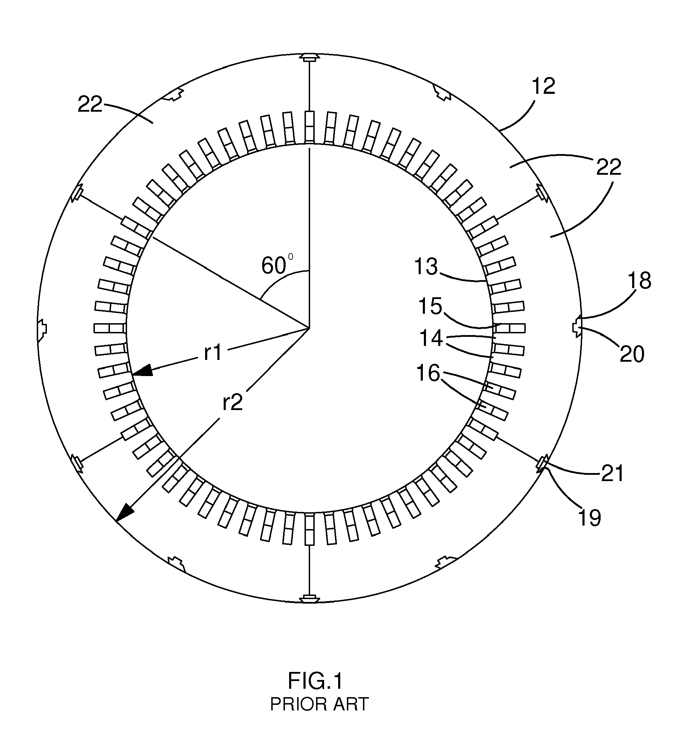

Figure 1 shows an axial cross section through the stator of an electrical machine embodying the present invention. The stator is formed from a plurality of metal laminations which are stacked in a direction coming out of the plane of the paper. The stator 10 is essentially cylindrical, with an outside surface 12 and inside surface 13. The inside surface has a radius r₁ while the outside surface has a radius r₂. A plurality of teeth 14 is provided on the inside of the stator, the teeth defining stator slots 15. Stator windings 16 are accommodated in the stator slots. Landing bar slots 18, 19 are provided around the outside surface of the stator. The landing bar slots 18, 19 accommodate locating or landing bars 20, 21. The landing bars 20, 21 pass axially through the stator, and are used to locate the laminations and hold them together.

Referring to Figure 1, it can be seen that each lamination is divided into six segments, with each segment extending through an angle of approximately 60°. Dividing the stator into segments can facilitate assembly of the machine, and may be necessary in larger machines due to limitations in the size of the available electrical steel from which the stator is formed. Although six segments are shown in Figure 1, any appropriate number of segments may be used, and thus each segment may extend through any appropriate angle.

In the arrangement shown, landing bar slots 18 are located at the centres of the segments, and the landing bar slots 19 are located at the junctions of two adjacent segments.

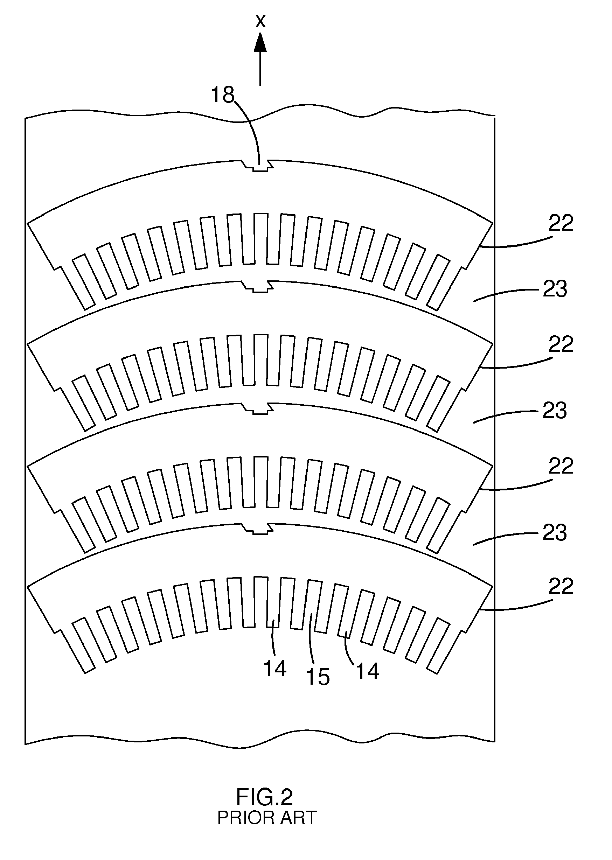

Figure 2 shows a known technique for punching stator segments from a roll of electrical steel. The roll of steel is unwound to form a strip of steel which extends in a direction x. A punching press with the appropriate set of punches is then used to punch successive segments 22 out of the strip. The punching press is typically a computer numerically controlled (CNC) press which is pre-programed to perform the processing of the raw material.

Referring to Figure 2, it can be seen that a significant proportion of the electrical steel is left behind when the segments 22 are punched out. The remaining material 23 would usually be discarded as scrap.

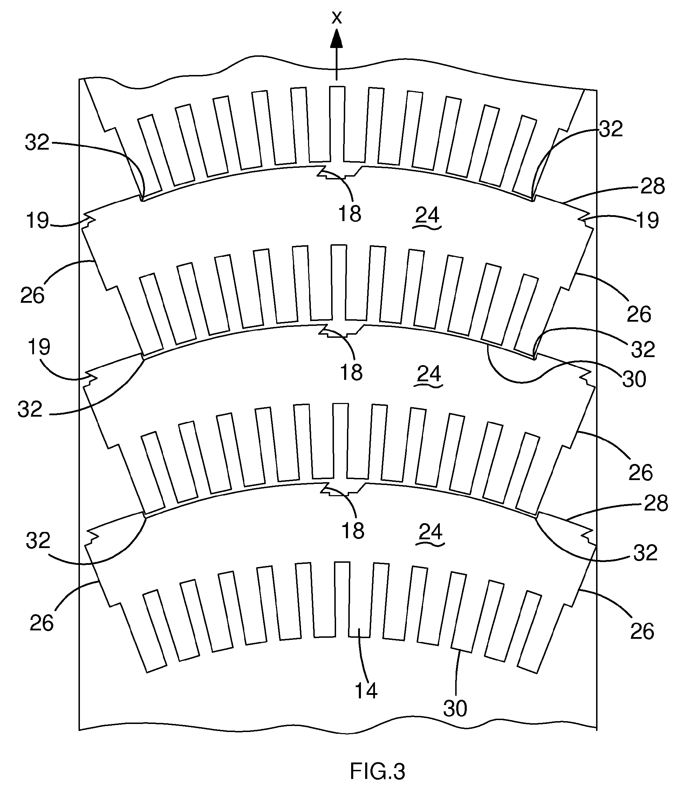

Figure 3 shows a segment design in accordance with an embodiment of the invention. The design of Figure 3 can allow the scrap rate of the electrical steel to be reduced, in comparison to previously known techniques.

Referring to Figure 3, each segment 24 comprises two radial edges 26, an outer edge 28, and an inner edge 30. Successive segments are punched from a roll of electrical steel using a punching press. A complete lamination is formed by joining together a number of segments along their radial edges 26, as shown in Figure 1. A complete stator core is then formed by stacking together a number of laminations. Successive laminations may be indexed (i.e. rotated relative to each other), so that the joints between the laminations do not coincide. Alternatively, complete stator segments may be formed from a number of lamination segments, and the stator segments may be pre-wound with stator windings prior to bringing the stator segments together.

As can be seen from Figures 1 to 3, the outer edge 28 and the inner edge 30 are curved, so that each segment widens in a radial direction. Thus, when successive segments are stamped from a roll of steel, only part of an outside edge 28 will lie adjacent to the inside edge 30 of the adjacent segment. Furthermore, the radius of curvature r₁ of an inside edge 30 is less than the radius of curvature r₂ of an outside edge 28. Thus, a bigger gap will exist between the two segments at a point towards their centre than at a point towards their extremities.

In the arrangement of Figure 3, each segment 24 is provided with two recesses or "cut-outs" 32 in its outside edge. The cut-outs are formed in such a way that a portion of an adjacent segment can be located within the cut-out. In particular, as shown in Figure 3, each cut-out 32 can accommodate part of the outermost teeth of an adjacent segment. This can allow the segments to be located closer together, thereby reducing the amount of scrap material.

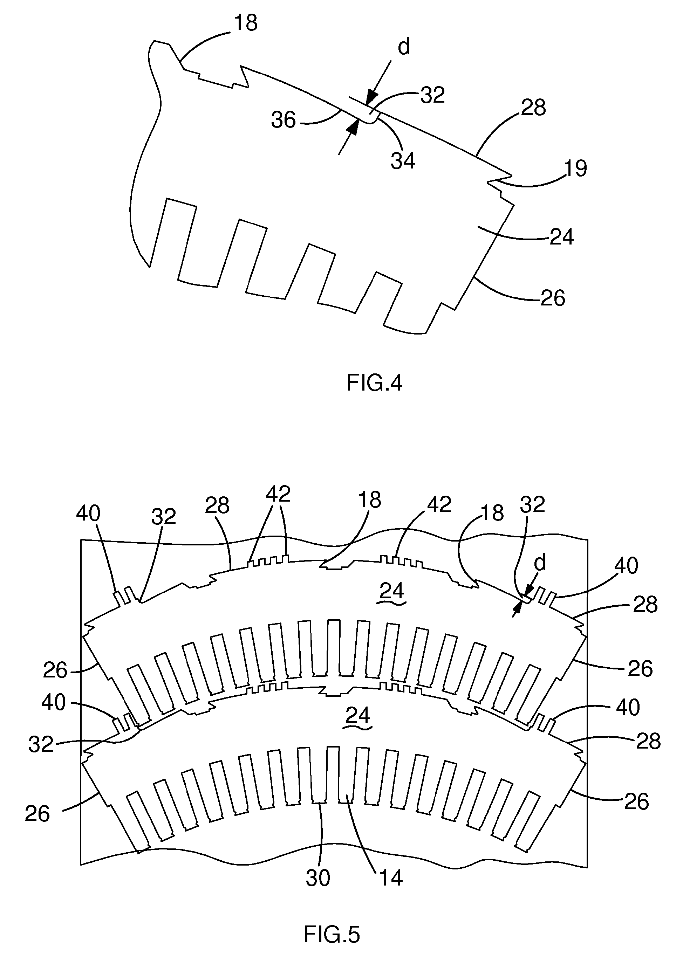

Figure 4 shows in more detail part of a segment 24 with a cut-out 32. Referring to Figure 4, the cut-out 32 has a side edge 34, and a bottom edge 36. The cut-out has a depth d at a point adjacent to the side edge 32. The bottom edge 36 is curved, such that depth of the cut-out decreases in a circumferential direction away from the side edge 32, to a point at which the depth of the cut-out is essentially zero. The bottom edge 36 has a radius of curvature which corresponds to that of the inner edge 30 of the segments 24. This can allow the outmost teeth in an adjacent segment to be located within a cut-out.

In the arrangement of Figures 3 and 4, landing bar slots 18 are provided at the centre of each segment. In addition, part of a landing bar slot 19 is provided on each side of the segment where the outer edge 28 meets the radial edge 26. A complete landing bar slot is thus formed when two segments are brought together, as shown in Figure 1. Since the widest part of a segment is where the outer edge meets the radial edge, by forming part of a landing bar slot at this point a narrower strip of raw material can be used for a given segment size.

The arrangement of Figures 3 and 4 can allow successive segments to be located closer together than would otherwise be the case, thereby reducing the amount of raw material which is consumed. If desired, successive laminations in the stator core may be indexed, so that, when viewed axially, the cut-outs do not all overlap. This may help to avoid any impact on the magnetic properties of the core.

Figure 5 shows a segment design in another embodiment of the invention. Parts which are in common with the first embodiment are given the same reference numerals and are not described further.

In the arrangement of Figure 5, each of the segments 24 comprises a plurality of cooling fins 40, 42 on its outside edge. In the assembled machine, the cooling fins assist in transferring heat away from the stator.

Referring to Figure 5, it can be seen that the fins are provided in different groups. The fins 40 in a first group are located towards the end of the outside edge 28, in a position which does not coincide with the teeth of an adjacent segment. Thus the fins 40 extend into an area of the raw material which would otherwise be discarded as scrap. As a consequence, the height of the fins 40 can be varied without impacting on the amount of raw material consumed. The height of the fins 40 is therefore selected to achieve the desired cooling, within the physical constraints of the machine.

By contrast, the fins 42 in a second group are located towards the centre of the outside edge 28, in a position which does coincide with the teeth of an adjacent segment. If the fins 42 were to have the same height as the fins 40, this would require adjacent segments to be located further apart, thus increasing the amount of raw material consumed. The height of the fins 42 is therefore chosen to be less than the height of the fins 40, in order to allow adjacent segments to be located closer together than would otherwise be the case.

In addition, the height of the fins in the second group increases slightly towards the centre of the segment, in line with the radius of curvature of the inside edge of the adjacent segment. This can allow the height of the fins in the second group to be maximised without increasing the amount of raw material consumed.

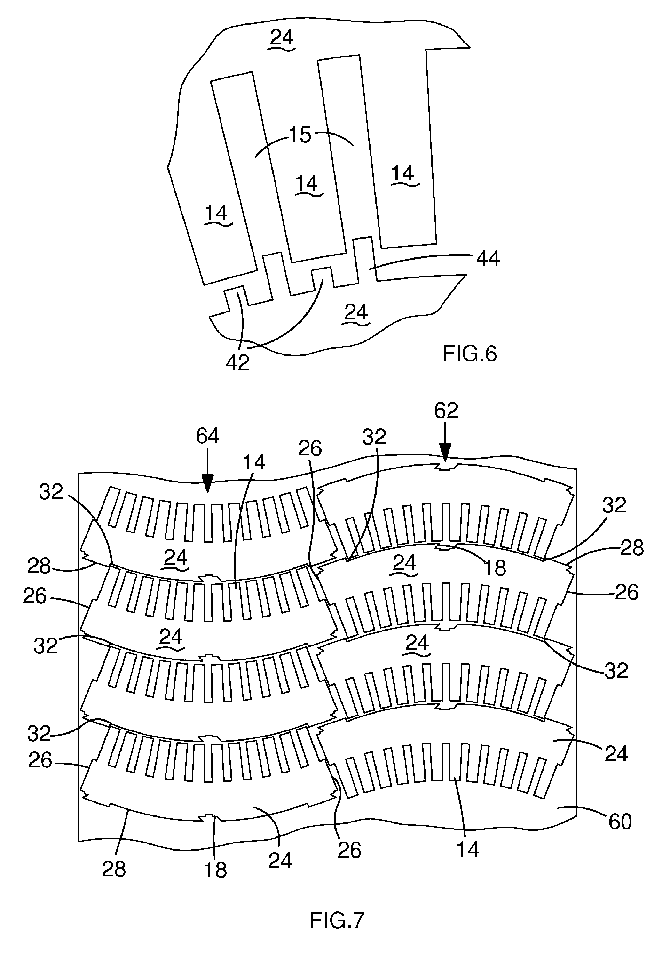

Figure 6 shows a more detailed part of two adjacent segments 24 with an alternative arrangement of a central group of fins. In the arrangement of Figure 6, fins 42 which coincide with teeth 14 in an adjacent segment have a reduced height, as in the arrangement of Figure 5. However, in the arrangement of Figure 6, some of the fins 44 extend into the slots 15 between the teeth 14. This can allow the fins 44 to have an increased height, without requiring adjacent segments to be located further apart. Thus this arrangement can allow the fins 44 to have a height similar to or the same as the fins 40, without increasing the amount of raw material consumed.

It will be appreciated that various different arrangements of fins are possible. For example, some or all of the reduced height fins 42 could be omitted, and all of the fins in the central portion of a segment could extend into slots in the adjacent segment. Any other appropriate combination of the various fins 40, 42, 44 could be provided, at any appropriate position along the outer edge of a segment.

Figure 7 shows a segment design in a further embodiment of the invention. Parts which are in common with the other embodiments are given the same reference numerals and are not described further.

In the arrangement of Figure 7 two lines of segments are produced from the same roll of steel. Such an arrangement may be possible either where smaller segments are to be produced, or where a wider roll of steel is available.

Referring to Figure 7, a first line of segments 62 is located on the right hand side of the strip of steel 60, and a second line of segments 64 is located on the left hand side of the strip of steel. Thus in this arrangement two lines of segments are located side-by-side on the strip of steel. The segments in one line are rotated by 180° with respect to the segments in the other line. Thus, the radial edge of a segment in one line runs substantially parallel to the radial edge of a corresponding segment in the other line. This can allow the segments in one line to occupy some of the space which would otherwise be wasted between the segments in the other line. In this way, the total amount of waste material can be reduced.

In the arrangement of Figure 7, cut-outs 32 are provided in the outside edge 28 of the segments. This can allow the segments in each line to be located closer to each other, in the way described above with reference to Figures 3 and 4.

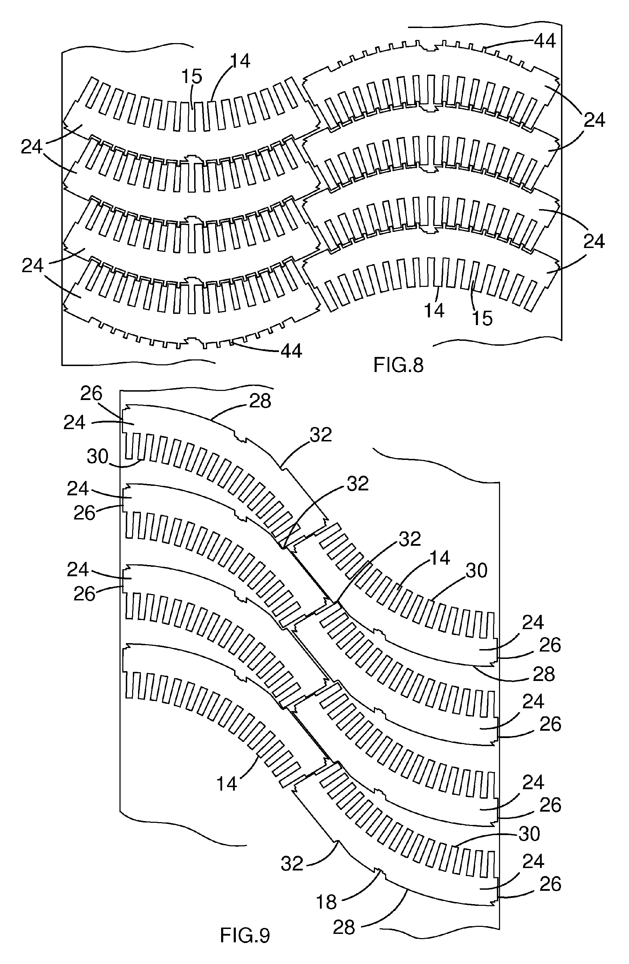

It will be appreciated that various different combinations of the above embodiments are possible. For example, in the arrangement of Figure 7, the cut-outs 32 could be omitted. Furthermore, if desired, cooling fins such as those shown in Figures 5 and 6 could be provided on the segments of Figure 7. For example, Figure 8 shows an arrangement in which cooling fins 44 extend into the stator slots of the adjacent segment.

Dependent on the availability of electrical steel of the appropriate width, three or more lines of segments could be produced, with the segments in each line being rotated by 180° with respect to the segments in an adjacent line.

Electrical steel is a commercially available product which is typically available in certain standard widths. Furthermore, punching presses are usually designed to operate with raw materials of particular widths. It would therefore be advantageous to be able to use the same width of electrical steel for different sizes of segment.

Figure 9 shows a segment design in a further embodiment of the invention. Parts which are in common with the other embodiments are given the same reference numerals and are not described further.

In the arrangement of Figure 9 two lines of segments are produced from the same roll of steel as in the arrangement of Figures 7 and 8. In the case of Figure 9, the segments are shown in the opposite configuration, i.e. with the teeth on the left hand side facing downwards, and the teeth on the right hand side facing upwards.

Usually, in order to maximise the use of the electrical steel, the segments lie square on the strip of steel. Thus a radial line through the centre of the segments would run substantially parallel to the direction of the steel. However, in the arrangement of Figure 9, the segments are rotated relative to their normal position through an angle of approximately 35°. Thus, each segment has a radial edge 26 which runs parallel to the direction of the strip of steel.

The arrangement of Figure 9 can allow two lines of segments to be produced from a strip of raw material which would not otherwise be wide enough. This can allow stock inventory to be reduced, and a single punching press to be used for more than one segment size.

In the arrangement of Figure 9, a cut-out 32 is provided in the outer edge 28 of each of the segments. Since the segments fan out from the centre of the strip of steel towards its edge, in this arrangement only a single cut-out is provided in each segment.

In other embodiments, by rotating the segments by different amounts, rolls of electrical steel having the same width can be used for different sized segments. For example, the segments could be rotated through approximately 36° or 40° or 45° or any other appropriate angle. This could be done with a single line of segments, or with two or more lines of segments. This may allow the cost of production to be reduced by allowing a single size of steel to be used for differently sized stators and/or different segment angles.

In general, the use of cut-outs in the segments will reduce the overall amount of magnetic material in the stator core. This in turn may have an effect on the magnetic properties of the stator. For example, reducing the amount of magnetic material in the stator may increase the magnetising current required to produce the same magnetic flux. While any such effect may be reduced by indexing the stator laminations, it may be desirable to provide further measures to reduce any impact of the cut-outs.

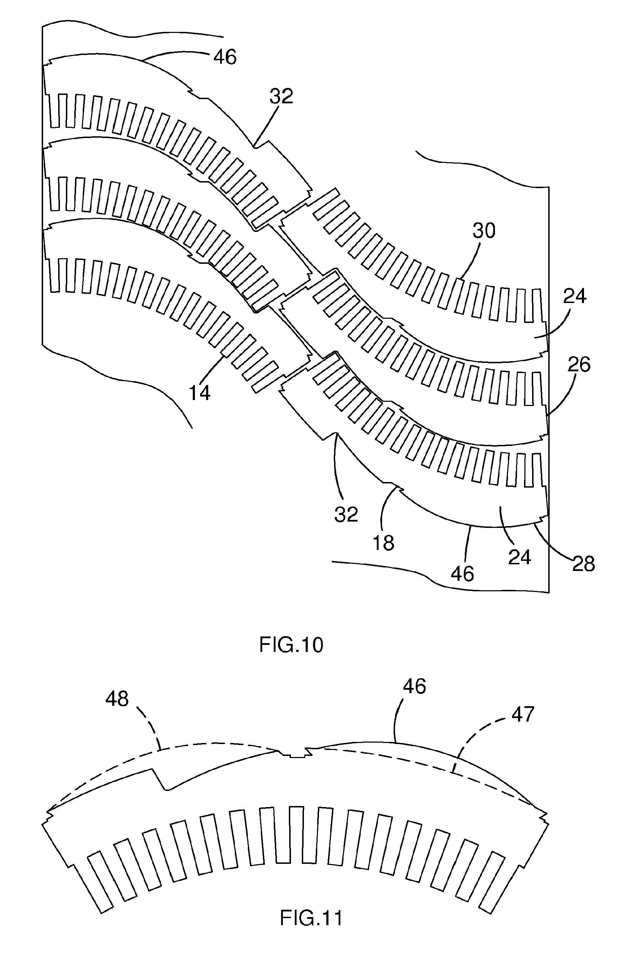

Figure 10 shows a segment design in another embodiment of the invention. In the arrangement of Figure 10 two lines of segments are produced from the same roll of steel, and the segments are arranged at an angle, as in the arrangement of Figure 9. A single cut-out 32 is provided in each segment on the side where the segments are closest together. In addition, each segment has a protrusion 46 in its outer edge on the side where the segments are further apart. Each protrusion extends beyond the normal radius of the segment. As can be seen from Figure 10, the protrusions 46 are formed from part of the raw material which would otherwise be discarded as scrap.

Figure 11 shows a single segment from the embodiment of Figure 10. The dashed line 47 shows the profile the segment would have if the protrusion 46 were not provided. The dashed line 48 shows the profile of a protrusion from an adjacent segment.

When the segments of Figures 10 and 11 are assembled to form a stator core, the laminations are indexed by an angle equivalent to half of the segment angle (30° in this example). Alternatively, an indexing angle of one third of the segment angle, or some other value, could be used. Thus, in the assembled stator, a cut-out in one lamination coincides with a protrusion in an adjacent lamination. This helps to compensate for any loss of material caused by the cut-outs, and thus helps to reduce any impact on the magnetic properties of the stator core which may be caused by the cut-outs.

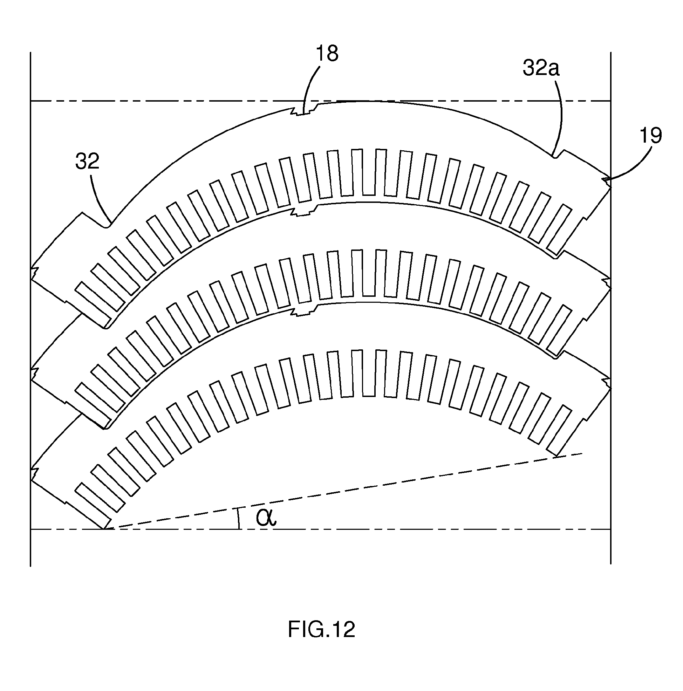

Figure 12 shows another embodiment of the invention. In the arrangement of Figure 12, each segment has a segment angle of 90°, and thus four segments are used to make a complete lamination. Each segment is stamped from a strip of electrical steel, as in previous embodiments. The segments are inclined to the strip of steel at an angle α. By rotating the segments in this way, a segment angle of 90° can be achieved with a strip of steel which would not otherwise be wide enough. In the example of Figure 12 the angle α is approximately 9°. However any appropriate value of α could be used, together with any appropriate segment angle, in order to allow the segments to fit onto a strip of electrical steel of a given width.

In the arrangement of Figure 12, in order to reduce the gap between the segments, two cut-outs 32, 32a are provided in the outer edge of each segment. Due to the angle at which the segments lie on the strip of steel, the cut-outs 32 are deeper than the cut-outs 32a. This can allow the segments to lie as close together as possible, while minimising the amount of material which is removed from the segments.

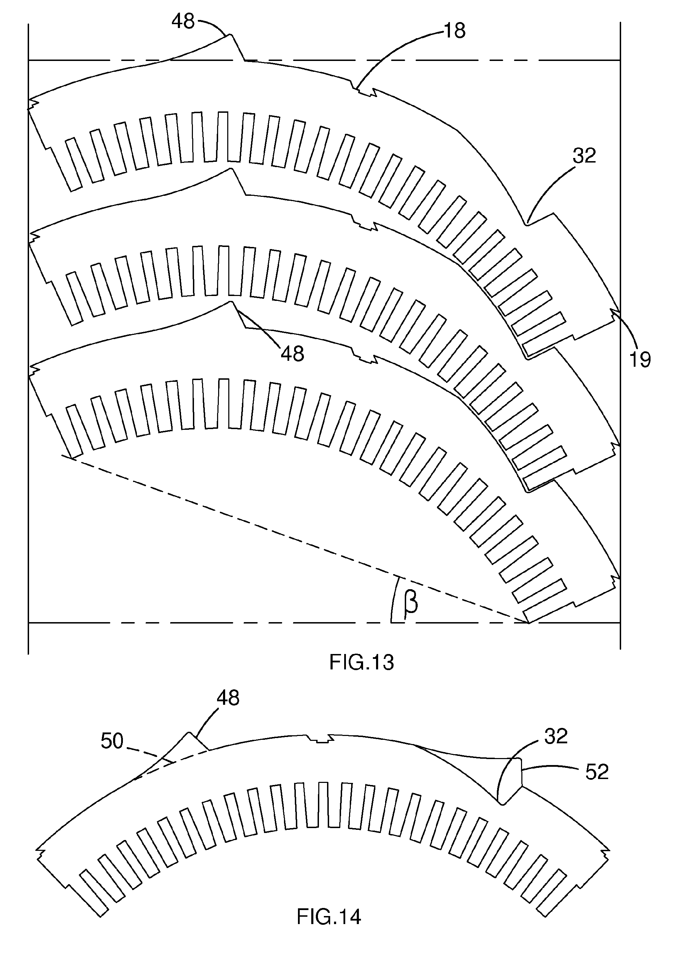

Figure 13 shows a segment design in another embodiment of the invention. In the arrangement of Figure 13 each segment has a segment angle of 90°. The segments are inclined to the strip of steel at angle β, which in this example is approximately 20°. A cut-out 32 is provided in each segment on the side where the segments lie closer together. In addition, a protrusion 48 is provided on each segment on the side where the segments lie further apart. The protrusions 48 are formed from part of the raw material which would otherwise be discarded as scrap.

Figure 14 shows a single segment from the embodiment of Figure 13. The dashed line 50 shows the profile the segment would have if the protrusion 48 were not provided. The dashed line 52 shows the profile a protrusion would have if it were provided on the right hand side of the segment of Figure 13. As can be seen from Figures 13 and 14, each protrusion is approximately the mirror image of a cut-out.

When the segments of Figures 13 and 14 are assembled to form a stator core, the laminations are indexed by an angle equivalent to half of the segment angle (45° in this example). Thus, in the assembled stator, a cut-out 32 in one lamination coincides with a protrusion 48 in an adjacent lamination. Since a protrusion is approximately the mirror image of a cut-out, at any point around the circumference of the stator the amount of material removed by a cut-out in one lamination is approximately equal to the amount of material added by a protrusion in an adjacent lamination. This may provide a matched compensation for any loss of material caused by the cut-outs, and thus may compensate for any impact on the magnetic properties of the stator core caused by the cut-outs. Thus this arrangement may help to ensure that the magnetic properties of the stator are as close as possible to those of a stator without cut-outs.

In alternative embodiments, one or more protrusions are provided on the outer edge of a segment which does not have a cut-out, the protrusions being located in an area which would otherwise be scrap. This can allow segments with a reduced yoke height to be used, with the protrusions compensating for any impact this may have on the magnetic properties of the stator core.

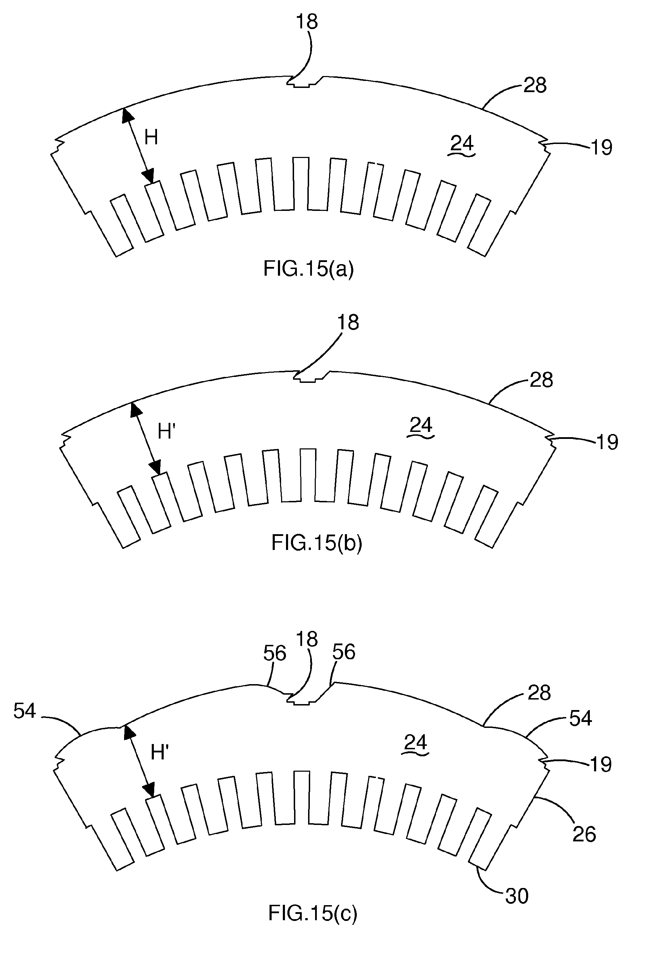

Figures 15(a) to 15(c) show three different segment designs. In the segment design of Figure 15(a) the segment has a yoke height H, which is the distance from the inside of a stator slot to the outside of the segment. The yoke height H is chosen to give the size of stator necessary to produce the desired magnetization.

In Figure 15(b) the yoke height is reduced to a value of H'. As a consequence, the outer edge 28 and the landing bar slots 18, 19 are located at a reduced radius. Reducing the yoke height in this way can allow the segments to be packed more tightly on a strip of electrical steel, thus reducing the consumption of the raw material. However, reducing the yoke height reduces the amount of magnetization which is available in the stator.

In the arrangement of Figure 15(c) the yoke height is reduced to a value H' as is the case in Figure 15(b). However, in Figure 15(c), protrusions 54, 56 are provided on the outside edge 28 of the segment, in order to support magnetization of the stator. The protrusions 54 are located towards the end of the outside edge, in a position which does not coincide with the teeth of an adjacent segment. Thus the protrusions 54 extend into an area of the raw material which would otherwise be discarded as scrap. The protrusions 56 have a height which gradually increases towards the centre of the outside edge 28, in line with the radius of curvature of the inside edge of the adjacent segment. Thus the protrusions 56 extend into an area which would otherwise be unused between two adjacent segments.

Conceptually, the segment of Figure 15(c) may be considered as having a recess between two protrusions 54, 56. However in this arrangement the landing bar slots 18, 19 are located at a part of the segment having a reduced yoke height H'.

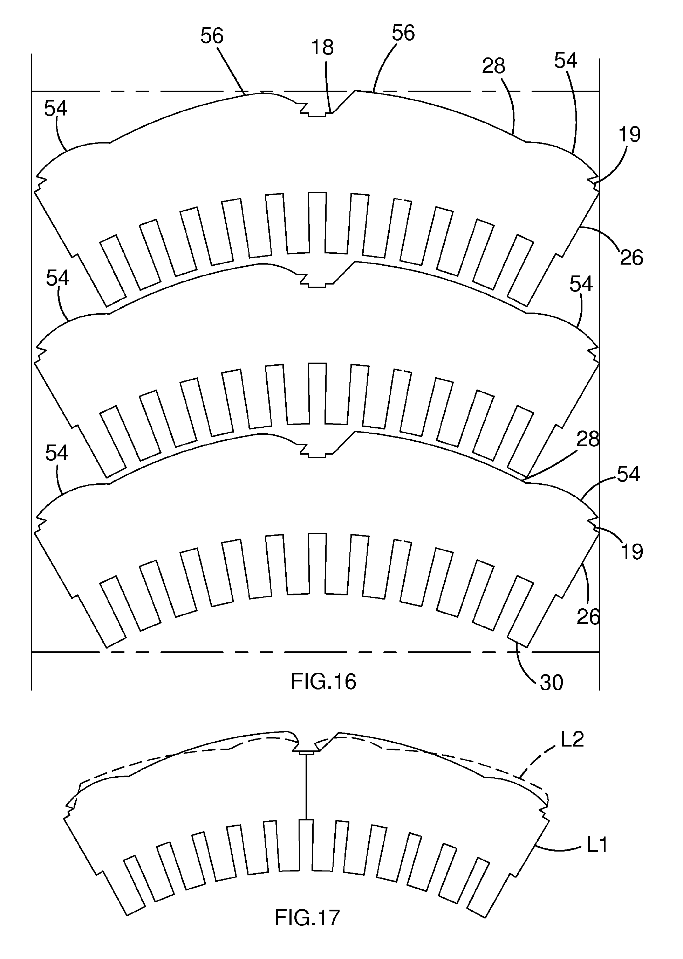

Figure 16 shows how the segments of Figure 15(c) can be produced from a roll of electrical steel. As can be seen from Figure 16, the protrusions 54, 56 are formed from part of the raw material which would otherwise be discarded as scrap.

In the arrangement of Figure 16 a single line of segments is produced from the roll of steel, and the segments are arranged square on the roll. However, it would also be possible for two or more lines of segments to be produced from the same roll of steel, and/or for the segments to be arranged at an angle, for example in any of the ways described above with reference to Figures 7 through 14. Furthermore, cooling fins may be provided on the outside edge where appropriate, for example in any of the ways described above with reference to Figures 5, 6 and 8.

When the segments of Figures 15(c) and 16 are assembled to form a stator core, the laminations are indexed by an angle equivalent to half of the segment angle (30° in this example), or another appropriate angle.

Figure 17 shows the profiles of two adjacent lamination segments L₁, L₂. As can be seen from Figure 17, an area of reduced yoke height in one lamination coincides with a protrusion in an adjacent lamination. This helps to compensate for the loss of material caused by the reduced yoke height, and thus helps to reduce any impact on the magnetic properties of the stator core.

In any of the above embodiments, a punching press may be used to punch the segments out of the strip of raw material. The punching press is provided with the appropriate set of punches, and is typically pre-programed to perform the processing of the raw material.

It has been found that, through use of the various measures described above, the effective height of the raw material can be reduced, resulting in a saving in the amount of raw material consumed. Furthermore, a single width of electrical steel may be used for a plurality of different stator sizes and/or segment angles, which may result in further efficiencies.

While preferred embodiments of the invention have been described with reference to particular examples, it will be appreciated that modifications of detail are possible. In particular, features of any one of the above embodiments may be used with any of the other embodiments, if necessary with the appropriate adjustments.

## Claims

1. A method of manufacturing lamination segments for the stator of an electrical machine, the method comprising producing successive segments from a strip of raw material, wherein a segment has a recess in its outer edge, and a portion of an adjacent segment is produced from raw material within the recess.

2. A method according to claim 1, wherein at least part of an inner edge of the adjacent segment lies within the recess.

3. A method according to claim 1 or 2, wherein the recess has a shape which substantially corresponds to part of an inner edge of the adjacent segment.

4. A method according to any of the preceding claims, wherein the recess is located in a position on the outer edge which corresponds to a circumferentially outermost part of the inner edge of the adjacent segment.

5. A method according to any of the preceding claims, wherein the depth of the recess decreases in a circumferential direction towards the centre of the segment.

6. A method according to any of the preceding claims, wherein the centre of a segment is not recessed.

7. A method according to any of the preceding claims, wherein each segment comprises two recesses in its outer edge, and each recess is located in a position which corresponds to a circumferentially outermost part of the inner edge of the adjacent segment.

8. A method according to any of the preceding claims, wherein the or each recess is arranged such that, when the segments are assembled into laminations, at least two laminations have segments with recesses which do not overlap.

9. A method according to any of the preceding claims, wherein a segment comprises at least one cooling fin on its outer edge, and the cooling fin is formed from a part of the raw material which would otherwise be scrap.

10. A method according to any of the preceding claims, wherein a segment comprises at least one cooling fin on its outer edge which extends into a stator slot in an adjacent lamination segment.

11. A method according to any of the preceding claims, wherein two lines of segments are produced from the strip of raw material, and part of a segment in one line is located in an area between two adjacent segments of the other line.

12. A method according to claim 11, wherein the segments in one line are rotated with respect to the segments in the other line.

13. A method according to any of the preceding claims, wherein the segments are arranged at an angle to the strip of raw material.

14. A method according to any of the preceding claims, wherein the segment has a recess in one part of its outer edge, and a protrusion on another part of its outer edge, wherein the protrusion is provided to support magnetisation in the stator core and is created from a part of the raw material which would otherwise be scrap.

15. A punching press arranged to carry out the method of any of the preceding claims.
